# EUROPÄISCHE PATENTSCHRIFT

(11) **EP 1 002 165 B1**
(45) Veröffentlichungstag und Bekanntmachung des Hinweises auf die Patenterteilung: **03.04.2002**
(21) Anmeldenummer: 98935027.7
(22) Anmeldetag: 08.07.1998
(51) Int. Cl.: E04B 1/26, E04C 3/12, F16B 11/00

(54) **VERBINDUNGSELEMENT ZUR VERANKERUNG IN EINEM HOLZWERKSTÜCK**
BONDING UNIT TO BE FIXED IN A WOOD PART
ELEMENT DE LIAISON A FIXER DANS UNE PIECE DE BOIS

(30) Priorität: 06.08.1997 DE 29714018 U
(43) Veröffentlichungstag der Anmeldung: 24.05.2000
(73) Patentinhaber: UPAT GMBH & CO, 79312 Emmendingen (DE)
(72) Erfinder: BRAUN, Axel, D-79331 Teningen (DE); GRÜN, Jürgen, D-79268 Bötzingen (DE); SCHÄTZLE, Joachim, D-79341 Kenzingen (DE)
(86) Internationale Anmeldenummer: EP9804232
(87) Internationale Veröffentlichungsnummer: WO9907956

(56) Entgegenhaltungen:
- EP-A- 0 263 350
- DE-A- 3 132 828
- FR-A- 2 706 802
- US-A- 2 584 133

## Beschreibung

Die Erfindung betrifft ein Verfahren zur Verankerung eines Verbindungselements in einem Holzwerkstück mit den Merkmalen des Oberbegriffs des Anspruchs 1.

Aus der DE 31 32 828 A1 ist die Verankerung eines Verbindungselements mit einem rohrförmigen Verankerungsabschnitt bekannt, der in eine im Querschnitt kreisringförmige und einen zylindrischen Kern aufweisende Ausnehmung eines Holzwerkstücks eingeklebt ist. In das Stirnende des Verankerungsabschnitts ist ein Anschlußteil eingesetzt, das als Verbindungseinrichtung ein Gewindeloch zum Verbinden des Holzwerkstücks mit einem weiteren Bauteil aufweist. Der Verankerungsabschnitt des bekannten Verbindungselements wird in eine kreisringförmige und einen zylindrischen Kern aufweisende Ausnehmung in der Weise eingeklebt, daß das Anschlußteil sich außerhalb des Holzwerkstücks befindet. Dadurch ergeben sich bei der Verankerung eine Reihe von Nachteilen. So ist beispielsweise mit dem bekannten Verbindungselement kein bündiger Anschluß des Holzwerkstücks an einem Bauteil möglich. Damit wirken auf das Verbindurigselement Quer- und Biegekräfte, die von dem freistehenden Querschnitt des rohrförmigen Verankerungsabschnitts aufgenommen werden müssen. Ferner steht als Auflager für das anzuschließende Bauteil nur die erheblich kleinere Stirnfläche des Verbindungselements zur Verfügung, was die Winkelstabilität der Verbindung beeinträchtigt. Desweiteren ist der Aufbau einer Holzkonstruktion mit dem bekannten Verbindungselement sehr schwierig, da die Abstände und damit die Länge der Holzwerkstücke jeweils von der Einbindetiefe des Verankerungsabschnitts der Verbindungselemente abhängt.

Aus der DE 44 06 433 A1 sind ebenfalls Verbindungselemente mit einem zum Einkleben in einem Holzwerkstück vorgesehenen Verankerungsabschnitt bekannt. Diese Verbindungselemente sind als Flacheisen ausgebildet, die eben oder beispielsweise gewölbt oder S-förmig gebogen sein können. Die bekannten Verbindungselemente werden in Schlitze im Holzwerkstück eingeklebt, wobei sie über einen Teil ihrer Länge aus dem Holzwerkstück vorstehen und so die Verbindung mit einem anderen Bauteil ermöglichen.

Zur Verankerung dieser bekannten Verbindungselemente sind tiefe Schlitze mit einer begrenzten und auf der gesamten Tiefe gleichbleibenden Breite erforderlich, die aufwendig im Holzwerkstück anzubringen sind. Ist das Verbindungselement gewölbt oder beispielsweise S-förmig gebogen, vergrößert sich der Aufwand zur Fertigung des Schlitzes. Hinzu kommt, daß die bekannten Verbindungselemente eine Vorzugsrichtung aufweisen: Die Steifigkeit der Verbindungsstelle gegen Knicken ist in Richtung einer Breite des Verbindungselementes ein Vielfaches größer als in Richtung senkrecht zum Verbindungselement.

Ferner sind zur Verankerung in Holzwerkstücke Verbindungselemente wie beispielsweise Schraubkloben, Türbeschläge oder dgl. bekannt, die an ihrem Verankerungsabschnitt ein Gewinde aufweisen und durch Eindrehen in einen Spreizdübel im Holzwerkstück verankert werden. Derartige Verbindungselemente sind allerdings zur Übertragung hoher Lasten nicht geeignet, da die Verankerung nur auf Reibkraft beruht, die durch die Verpreßung des Kunststoffs im Bohrloch erzeugt wird. Dabei entsteht außerdem eine Spreizkraft, die eine Verwendung in dünnen Holzwerkstücken aufgrund der Ausbruchgefahr nicht zuläßt.

Der Erfindung liegt die Aufgabe zugrunde, eine spreizdruckfreie Verankerung eines Verbindungselements in einem Holzwerkstück zu ermöglichen, die einen bündigen Anschluß eines Bauteils an dem Holzwerkstück zuläßt und in der Lage ist, hohe Quer- und Biegekräfte aufzunehmen.

Diese Aufgabe wird erfindungsgemäß durch ein Verfahren mit den Merkmalen des Anspruchs 1 gelöst. Das Verbindungselement weist einen rohrförmigen Verankerungsabschnitt auf, der in eine komplementäre Ausnehmung mit kreisringförmigem Querschnitt eingeklebt wird. Die kreisringförmige Ausnehmung wird mittels eines an sich bekannten Ringbohrers im Holzwerkstück angebracht. Beispielsweise mittels eines Bohrers oder Fräsers wird der Kern der Ausnehmung vertieft, so dass die Stirnseite des Kerns unterhalb der Oberfläche des Holzwerkstücks mindestens um die Dicke des im Verankerungsabschnitt eingesetzten Anschlußteils endet. Die Spaltbreite der kreisringförmigen Ausnehmung ist größer als die Wanddicke des Verankerungsabschnitts, so daß eine Klebefuge an der Innen- und an der Außenseite des Verankerungsabschnitts zwischen dem Verankerungsabschnitt und dem Holzwerkstück besteht. Das Verbindungselement wird mit einem Kleber in die Ausnehmung in der Weise eingesetzt und verklebt, daß sein Verankerungsabschnitt mit Anschlußteil bündig oder versenkt im Holzwerkstück verankert ist.

Durch die erfindungsgemäße Lösung wird die gesamte Mantelfläche des Verankerungsabschnitts als Klebefläche genutzt. Ferner ist eine direkte Auflage des anzuschließenden Bauteils auf der Stirnseite des Holzwerkstücks möglich, so daß an der Verbindungsstelle keine Biegekräfte sondern nur noch Querkräfte auftreten, die vom Querschnitt des Verankerungsabschnitts innerhalb des Holzwerkstücks und damit im abgestützten Bereich aufgenommen werden. Damit sind auch geringere Querschnitte des Verankerungsabschnitts und eine Reduzierung der Gesamtlänge des Verbindungselements möglich. Ferner wird die Planung und Durchführung von Holzkonstruktionen erleichtert, da die Abstände zwischen zwei Verbindungsstellen durch die Länge der Holzbalken bestimmt wird und nicht von der Verankerungstiefe des Verbindungselements abhängt. Die erfindungsgemäße Verankerung ermöglicht auch eine größere Auflage der zu verbindenden Bauteile und bewirkt damit eine höhere Winkelsteifigkeit.

Das Anschlußteil weist eine Verbindungseinrichtung beispielsweise in Form eines Gewindelochs oder eines Gewindebolzens auf und ermöglicht damit eine einfache Verbindung des Holzwerkstücks mit einem anderen Bauteil. Das andere Bauteil kann ebenfalls ein gleichartiges Verbindungselement zur Verbindung mit dem ersten Holzwerkstück aufweisen. Ebenso können andere, an sich bekannte Verbindungseinrichtungen am anderen Bauteil vorgesehen werden, wie beispielsweise ein Auge, ein Bolzen, ein Schraubanschluß.

In einer weiteren Ausgestaltung der Erfindung kann der rohrförmige Verankerungsabschnitt durch Schlitze in Verankerungssegmente aufgeteilt sein. Zur Erhöhung der Festigkeit der Verankerung des Verbindungselements im Holzwerkstück kann der Verankerungsabschnitt eine Aufrauhung seiner Außen- und/oder Innenoberfläche aufweisen.

Die Erfindung wird nachfolgend anhand in der Zeichnung dargestellter Ausführungsbeispiele näher erläutert. Es zeigen:
- Figuren 1 und 2: zwei Ausgestaltungen erfindungsgemäßer Verbindungselemente in perspektivischer Darstellung;
- Figur 3: einen Holzbalken mit einem darin verankerten Verbindungselement aus Figur 1.

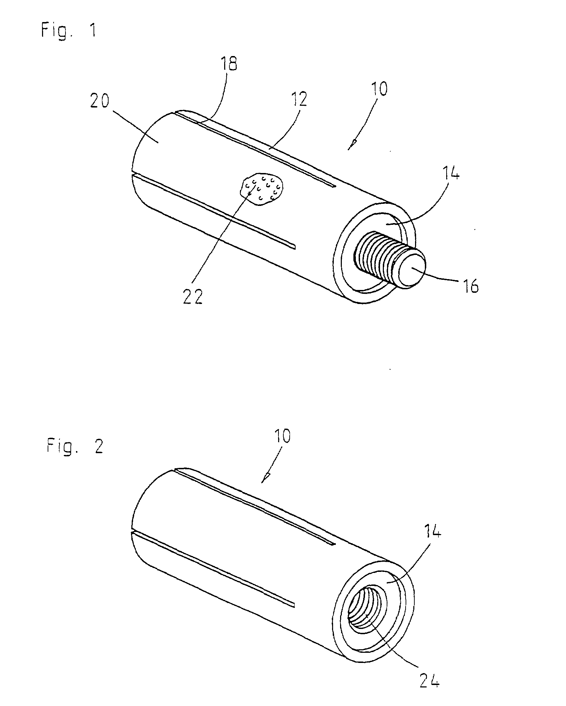

Das in Figur 1 dargestellte, erfindungsgemäße Verbindungselement 10 weist ein kreisrundes Rohr 12 auf, welches einen Verankerungsabschnitt des Verbindungselementes 10 bildet. In ein Stirnende des den Verankerungsabschnitt bildenden Rohres 12 ist ein zylindrisches Teil als Anschlußteil 14 des Verbindungselementes 10 eingesetzt und mit dem Rohr 12 verschweißt. Axial steht aus dem Anschlußteil 14 ein Gewindebolzen 16 vor, der eine Verbindungseinrichtung bildet. Der Gewindebolzen 1b ist in ein mit einem Innengewinde versehenes Mittelloch im Anschlußteil 14 eingeschraubt und durch einen oder mehrere Schweißpunkte gegen Verdrehen gesichert (nicht sichtbar). Von einer offenen, dem Anschlußteil 14 abgewandten Stirnseite her sind Längsschlitze 18 im Rohr 12 angebracht, die sich bis nahe an das Anschlußteil 14 erstrecken. Durch die Schlitze 18 ist eine Wand des Rohres 12 in Verankerungssegmente 20 unterteilt. Eine Außen- und/oder eine Innenoberfläche des Rohres 12 kann eine Aufrauhung aufweisen, wie unter Bezugszahl 22 in Figur 1 angedeutet.

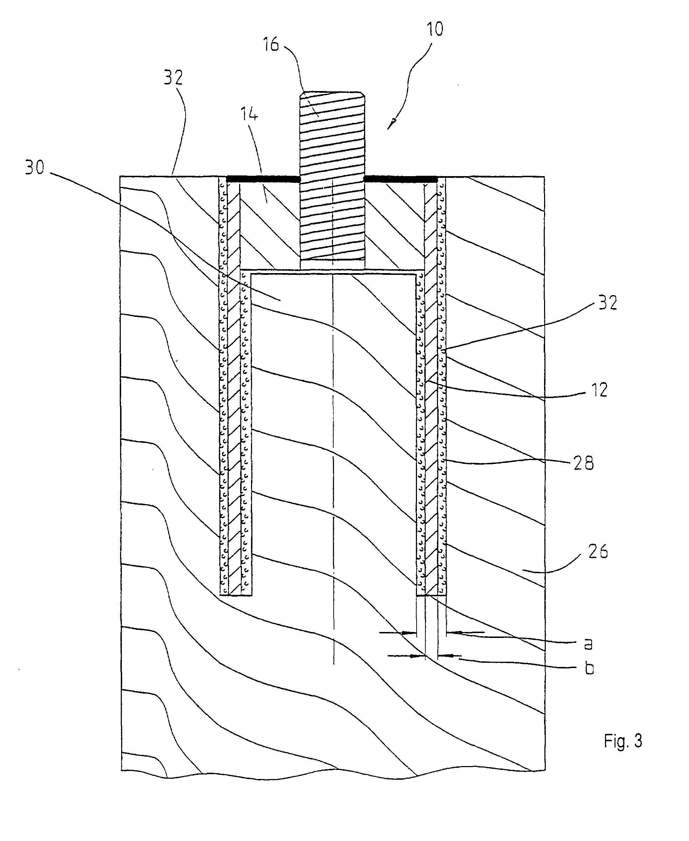

Das in Figur 2 dargestellte, erfindungsgemäße Verbindungselement 10 weist ein axiales Gewindeloch 24 als Verbindungeinrichtung in der Mitte seines Anschlußteils 14 auf. Im Übrigen stimmt das in Figur 2 dargestellte Verbindungselement 10 mit dem in Figur 1 dargestellten Verbindungselementes 10 überein. Es wird auf die vorstehenden Ausführungen verwiesen.

Die Anwendung des erfindungsgemäßen Verbindungselementes 10 ist in Figur 3 dargestellt. Zur Verankerung des Verbindungselementes 10 in einem Holzbalken 26 ist mittels eines nicht dargestellten, an sich bekannten Ringbohrers eine Ausnehmung 28 kreisringförmigen Querschnitts in einem Stirnende des Holzbalkens 26 angebracht. Die Ausnehmung 28 weist also die Form eines zylindrischen Schlitzes auf. Dabei ist eine Breite a der Ausnehmung 28 größer als eine Wanddicke b des den Verankerungsabschnitt bildenden Rohres 12 des Verbindungselementes 10. Ein innerhalb der Ausnehmung 28 stehengebliebener Kern 30, der aufgrund der im Querschnitt kreisrunden Ausnehmung 28 zylinderform hat und an seinem einen Stirnende einstückig mit dem Holzbalken 26 ist, ist mittels eines nicht dargestellten Bohrers oder Fräsers um geringfügig mehr als eine Dicke des Anschlußteils 14 gekürzt worden, d.h. der Kern 30 endet versenkt unter einer Stirnfläche 32 des Holzbalkens 26. Das Kürzen des Kerns 30 kann selbstverständlich auch durch Anbringen einer Ansenkung, also eines zylindrischen Sacklochs im Holzbalken 26 vor Herstellung der im Querschnitt kreisringförmigen Ausnehmung 28 erfolgen.

Das Verbindungselement 10 wird mit seinem den Verankerungsabschnitt bildenden Rohr 12 in die Ausnehmung 28 eingesetzt, wobei es nicht über die Stirnfläche 32 des Holzbalkens 26 vorsteht. Der gekürzte Kern 30 bietet Freiraum für das Anschlußteil 14 des Verbindungselementes 10, so daß sich auch das Anschlußteil 14 innerhalb des Holzbalkens 26 befindet und nicht über dessen Stirnfläche 32 vorsteht. Lediglich der Gewindebolzen 16 steht aus der Stirnfläche 32 des Holzbalkens 26 vor. Am Gewindebolzen 16 läßt sich der Holzbalken 26 an einem anderen, nicht dargestellten Bauteil anschrauben. Ein solches anderes Bauteil kann beispielsweise auch ein zweiter Holzbalken sein, in welchem beispielsweise die in Figur 2 dargestellte Hülse 10 verankert ist. Der Holzbalken 26 kann mit seiner Stirnseite gegen die Stirnseite des anderen Holzbalkens oder auch gegen dessen Längsseite stoßen.

Zur Verankerung des Verbindungselementes im Holzbalken 26 ist eine Fuge 32 zwischen dem Holzbalken 26 außerhalb des den Verankerungsabschnitt bildenden Rohres 12 und innerhalb des Rohres 12 zwischen dem Kern 30 des Holzbalkens 26 und dem Rohr 12 mit einem Kleber verfüllt. Eine Aufrauhung 22, wie in Figur 1 angedeutet, kann die Verankerung des Verbindungselementes 10 im Holzbalken 26 verbessern.

## Patentansprüche

1. Verfahren zur Verankerung eines Verbindungselements (10) mit einem rohrförmigen Verankerungsabschnitt (12), der in eine im Querschnitt kreisringförmige und einen zylindrischen Kern (30) aufweisende Ausnehmung (28) eines Holzwerkstücks (26) eingeklebt ist, sowie mit einem in das Stirnende des Verankerungsabschnitts (12) eingesetzten Anschlußteil (14), das eine Verbindungseinrichtung (16, 24) zum Verbinden des Holzwerkstücks (26) mit einem weiteren Bauteil aufweist, **dadurch gekennzeichnet, daß** der zylindrische Kern (30) der kreisringförmigen Ausnehmung (28) bezüglich einer Holzwerkstückoberfläche um mindestens der Dicke des Anschlußteils (14) vertieft ist, und das Verbindungselement (10) mit seinem Verankerungsabschnitt (12) und mit seinem Anschlußteil (14) nach dem Einkleben bündig oder versenkt mit dem Holzwerkstück (26) abschließt.

2. Verfahren nach Anspruch 1, **dadurch gekennzeichnet, daß** die Verbindungseinrichtung des Anschlußteils (14) ein Gewindeloch (24) ist.

3. Verfahren nach Anspruch 1, **dadurch gekennzeichnet, daß** die Verbindungseinrichtung des Anschlußteils (14) ein Gewindebolzen (16) ist.

4. Verfahren nach Anspruch 1, **dadurch gekennzeichnet, daß** der Verankerungsabschnitt (12) durch Schlitze (18) in Verankerungssegmente (20) aufgeteilt ist.

5. Verfahren nach Anspruch 1, **dadurch gekennzeichnet, daß** die Oberfläche des Verankerungsabschnitts (12) eine Aufrauhung (22) aufweist.

## Claims

1. A method for anchoring a connecting element (10) having a tubular anchoring portion (12), which is adhesively secured in a recess (28) of a wooden workpiece (26), the recess being of circular ring-shaped cross-section and comprising a cylindrical core (30), and having a connector part (14) inserted in the end face of the anchoring portion (12), which connector part comprises a connecting device (16, 24) for connecting the wooden workpiece (26) to a further component, **characterised in that** the cylindrical core (30) of the circular ring-shaped recess (28) is deepened in relation to a workpiece surface by at least the thickness of the connector part (14), and after the adhesion the connecting element (10) with its anchoring portion (12) and with its connector part (14) closes flush with or recessed in the workpiece (26).

2. A method according to claim 1, **characterized in that** the connecting device of the connector part (14) is a threaded hole (24).

3. A method according to claim 1, **characterized in that** the connecting device of the connector part (14) is a threaded bolt (16).

4. A method according to claim 1, **characterized in that** the anchoring portion (12) is divided by slots (18) into anchoring segments (20).

5. A method according to claim 1, **characterized in that** the surface of the anchoring portion (12) is roughened (22).

## Revendications

1. Procédé d'ancrage d'un élément de liaison (10) comprenant une région tubulaire d'ancrage (12) intégrée par collage dans un évidement (28) d'une pièce (26) en bois, muni d'une section transversale en forme d'anneau circulaire et doté d'un noyau cylindrique (30) ; ainsi qu'une partie de raccordement (14) insérée dans l'extrémité frontale de la région d'ancrage (12), et pourvue d'un système de solidarisation (16, 24) pour relier ladite pièce (26) en bois à une autre pièce structurelle, **caractérisé par le fait que** le noyau cylindrique (30) de l'évidement (28) en forme d'anneau circulaire est renfoncé, vis-à-vis d'une surface de ladite pièce en bois, d'au moins l'épaisseur de la partie de raccordement (14), et l'élément de liaison (10), englobant sa région d'ancrage (12) et sa partie de raccordement (14), se trouve dans l'affleurement ou en retrait, vis-à-vis de la pièce (26) en bois, à l'issue de l'intégration par collage.

2. Procédé selon la revendication 1, **caractérisé par le fait que** le système de solidarisation de la partie de raccordement (14) est un trou taraudé (24).

3. Procédé selon la revendication 1, **caractérisé par le fait que** le système de solidarisation de la partie de raccordement (14) est un tenon fileté (16).

4. Procédé selon la revendication 1, **caractérisé par le fait que** la région d'ancrage (12) est scindée en des segments d'ancrage (20) par l'intermédiaire de fentes (18).

5. Procédé selon la revendication 1, **caractérisé par le fait que** la surface de la région d'ancrage (12) présente un profilage rugueux (22).
